(19) 

(11) **EP 4 581 939 B1**

(12) **EUROPEAN PATENT SPECIFICATION**

(45) Date of publication and mention of the grant of the patent:
**09.09.2026 Bulletin 2026/37**

(21) Application number: **25176568.1**

(22) Date of filing: **09.06.2017**

(51) International Patent Classification (IPC):
***A23L 27/30*** *(2016.01)*

(52) Cooperative Patent Classification (CPC):
**A23L 27/88; A23L 2/60; A23L 27/30**

(54) **FLAVORED FOOD AND BEVERAGE PRODUCTS**

AROMATISIERTE LEBENSMITTEL- UND GETRÄNKEPRODUKTE

PRODUITS AROMATISÉS POUR ALIMENTS ET BOISSONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 US 201662357362 P**

(43) Date of publication of application:
**09.07.2025 Bulletin 2025/28**

(62) Document number(s) of the earlier application(s) in accordance with Art. 76 EPC:
**17729117.6 / 3 478 090**

(73) Proprietor: **Firmenich SA**
**1242 Satigny (CH)**

(72) Inventors:
- **DELATTRE, Maxime**
  **1242 Satigny (CH)**
- **DI PIETRO, Angela**
  **1242 Satigny (CH)**
- **CAYEUX, Isabelle**
  **1242 Satigny (CH)**
- **FREROT, Eric**
  **1242 Satigny (CH)**

(74) Representative: **Strych, Sebastian**
**Mitscherlich PartmbB**
**Karlstraße 7**
**80333 München (DE)**

(56) References cited:
**EP-A1- 1 909 599**
**CN-A- 101 787 062**
**FR-A5- 2 108 702**
**US-A- 3 876 777**
**US-A- 3 928 560**
**US-A1- 2008 242 740**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 581 939 B1

## Description

### FIELD

The inventions described herein have use in foods and beverages, particularly those that rely on sweeteners and other flavor components and more particularly those that might rely on compounds and ingredients.

### BACKGROUND

Natural products and ingredients found in nature are desirable for use in and as flavors and food ingredients. Compounds that can enhance, confer or modify the perception of the sweetness of a product are also desirable to attain low caloric foods and beverages that have the same perception of sweetness that a comparable product has with more high caloric sweeteners. EP 1 909 599 A1 describes a method and product for enhancing the sweetness of sweet substances by mixing hesperetin or its salts.

### SUMMARY

Provided herein is a method of enhancing the sweetness of a sweetener in a beverage or food product comprising adding Hesperetin Dihydrochalcone to the product in an amount of 2 ppm to 40 ppm by weight of the total weight of the product. Also provided herein is a beverage or food product comprising Hesperetin Dihydrochalcone in an amount of from 2 to 50 ppm, by weight, of the total weight of the product, and a sweetener.

### BRIEF DESCRIPTION OF THE DRAWINGS

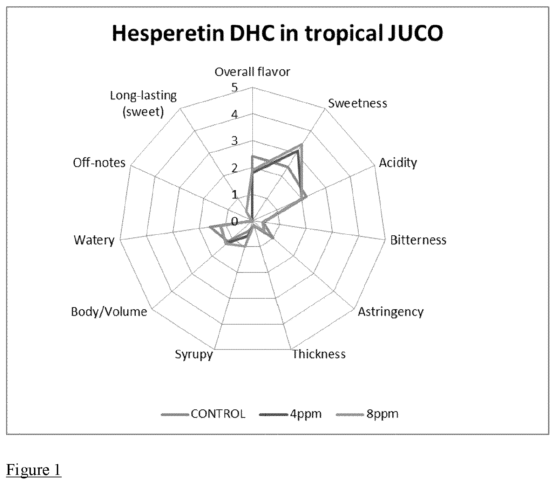

**Figure 1** shows the effect of Hesperetin Dihydrochalcone dosed at 4 ppm and 8 ppm in a tropical juice

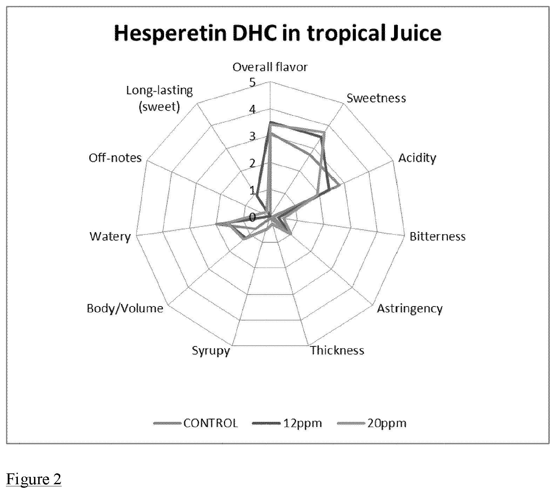

**Figure 2** shows the effect of Hesperetin Dihydrochalcone dosed at 12 ppm and 20 ppm in a tropical juice

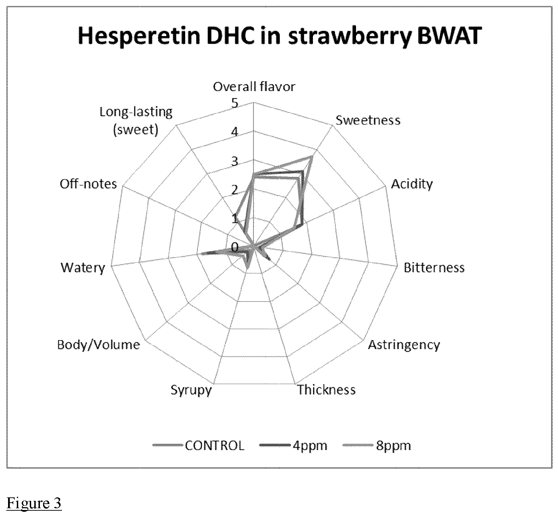

**Figure 3** shows the effect of Hesperetin Dihydrochalcone dosed at 4 ppm and 8 ppm in a strawberry flavored water

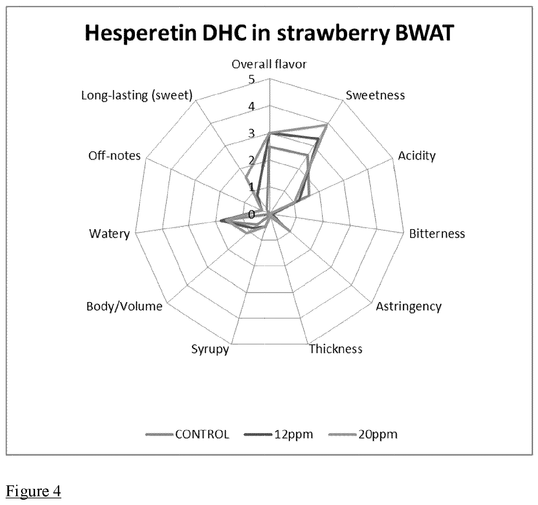

**Figure 4** shows the effect of Hesperetin Dihydrochalcone dosed at 12 ppm and 20 ppm in a strawberry flavored water

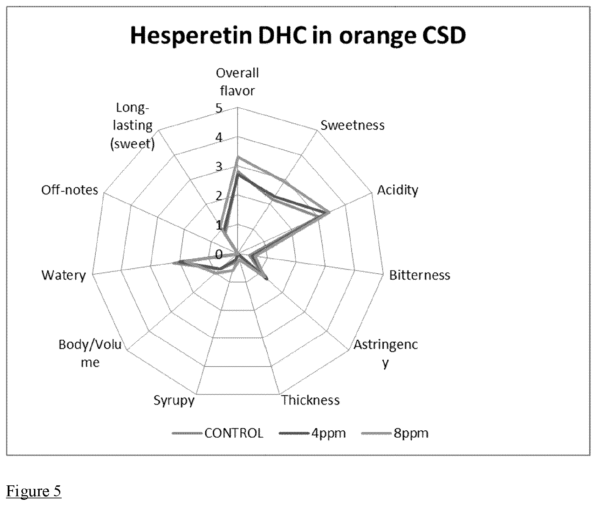

**Figure 5** shows the effect of Hesperetin Dihydrochalcone dosed at 4 ppm and 8 ppm in an orange carbonated soft drink

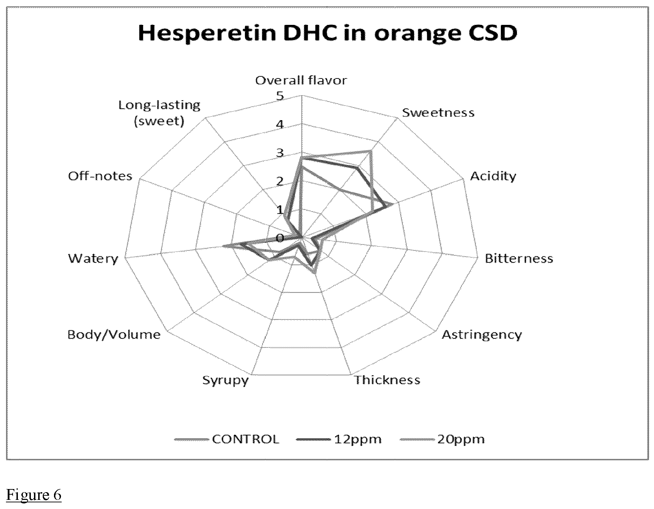

**Figure 6** shows the effect of Hesperetin Dihydrochalcone dosed at 12 ppm and 20 in an orange carbonated soft drink

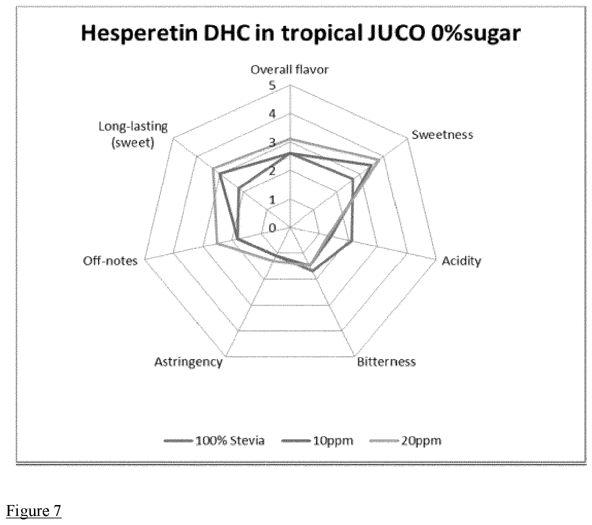

**Figure 7** shows the effect of Hesperetin Dihydrochalcone dosed at 10 ppm and 20 ppm in a stevia sweetened tropical juice

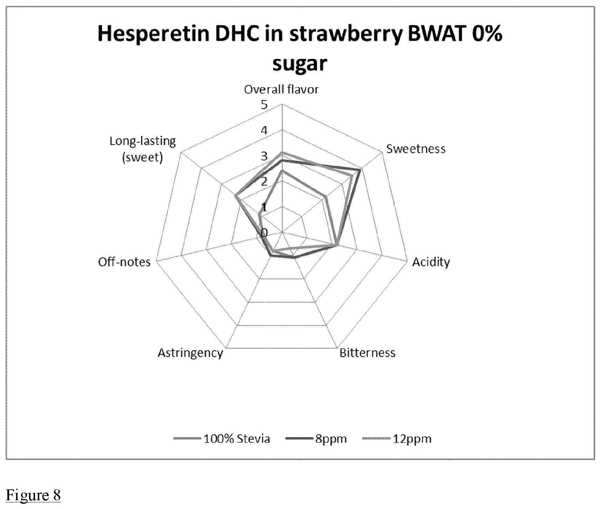

**Figure 8** shows the effect of Hesperetin Dihydrochalcone dosed at 10 ppm and 20 ppm in a stevia sweetened strawberry flavored water

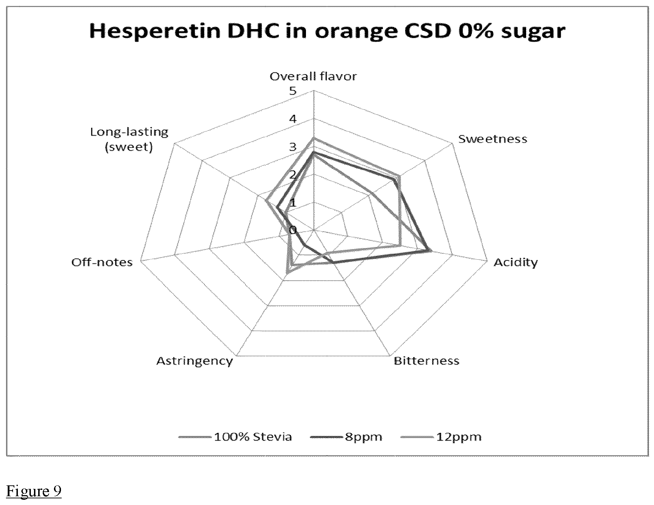

**Figure 9** shows the effect of Hesperetin Dihydrochalcone dosed at 10 ppm and 20 ppm in a stevia sweetened orange carbonated soft drink

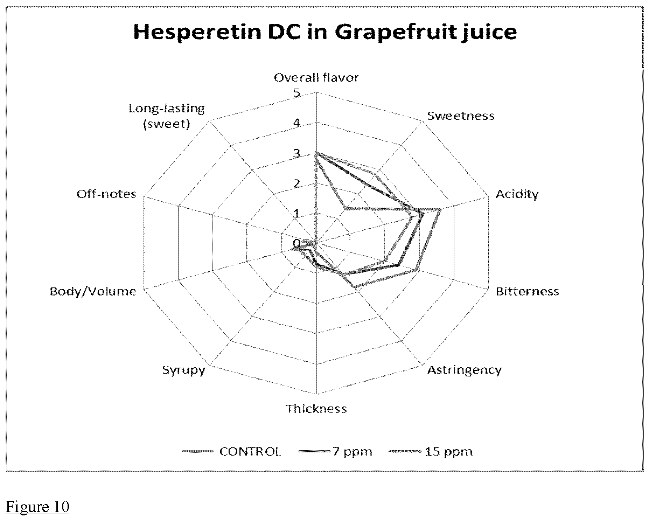

**Figure 10** shows the effect of Hesperetin Dihydrochalcone dosed at 7 ppm and 15 ppm in a grapefruit juice

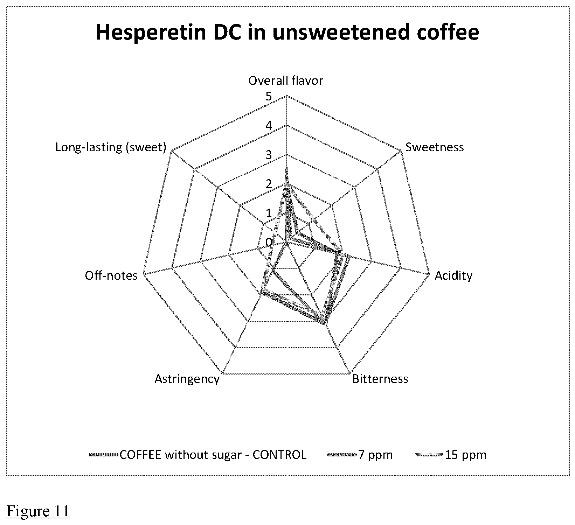

**Figure 11** shows the effect of Hesperetin Dihydrochalcone dosed at 7 ppm and 15 ppm in a sweetened coffee

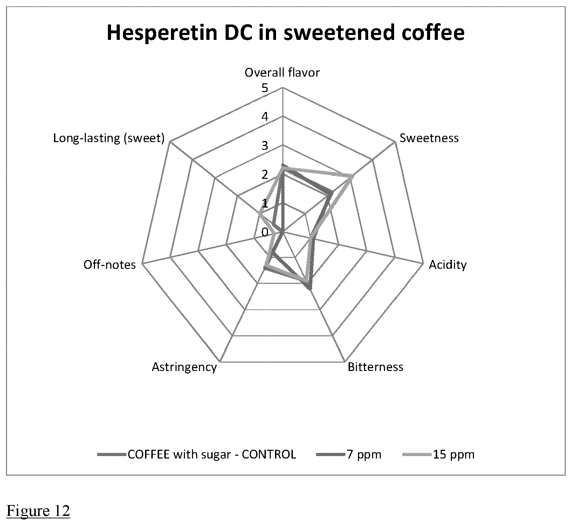

**Figure 12** shows the effect of Hesperetin Dihydrochalcone dosed at 7 ppm and 15 ppm in an unsweetened coffee

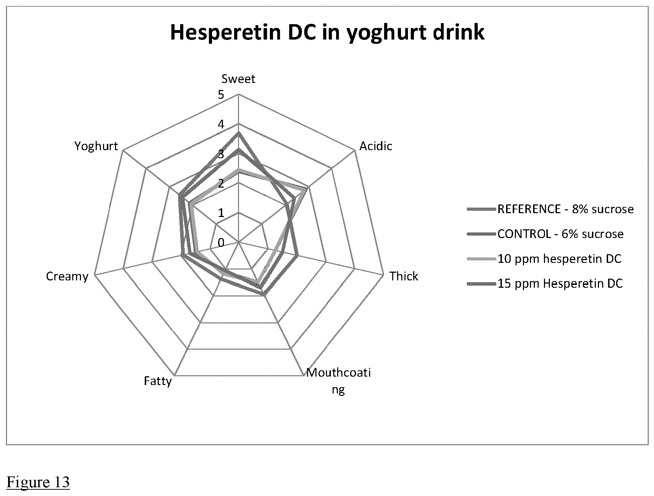

**Figure 13** shows the effect of Hesperetin Dihydrochalcone dosed at 10 ppm and 15 ppm in a yoghurt drink

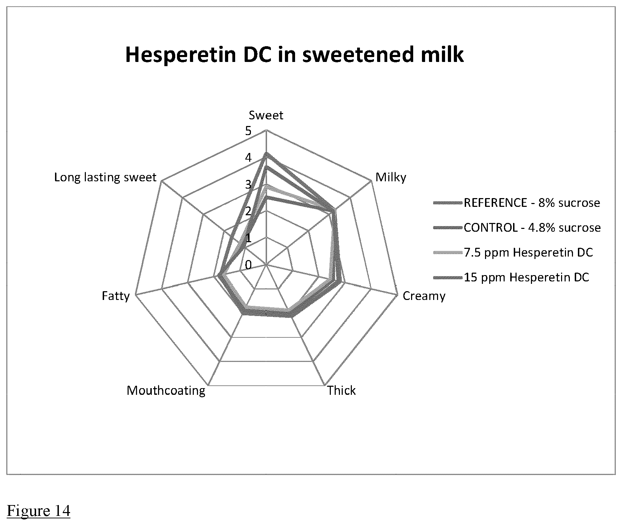

**Figure 14** shows the effect of Hesperetin Dihydrochalcone dosed at 7.5 ppm and 15 ppm in a yoghurt drink

### DETAILED DESCRIPTION

For the descriptions herein and the appended claims, the use of "or" means "and/or" unless stated otherwise. Similarly, "comprise," "comprises," "comprising" "include," "includes," and "including" are interchangeable and not intended to be limiting.

It is to be further understood that where descriptions of various embodiments use the term "comprising," those skilled in the art would understand that in some specific instances, an embodiment can be alternatively described using language "consisting essentially of" or "consisting of."

In one embodiment, Hesperetin Dihydrochalcone is provided in a beverage or food product in an amount of 2 ppm to 20 ppm by weight of the total weight of the beverage or food product, particularly in combination with sucrose or fructose more particularly in combination with 5% sucrose or fructose, by weight of the total weight of the beverage or food product.

In one embodiment, Hesperetin Dihydrochalcone is provided in a beverage or food product in an amount of 4 ppm to 20 ppm by weight of the total weight of the beverage or food product.

In a further embodiment, Hesperetin Dihydrochalcone is provided in a beverage or food product in an amount of 8 ppm to 20 ppm by weight of the total weight of the beverage or food product.

However, when combined with others sweeteners, Hesperetin Dihydrochalcone provides sweetness enhancement to composition comprising a sweetener. In some embodiments, Hesperetin Dihydrochalcone provides a sweetness equivalent to 1-2°brix of sucrose equivalents.

In another embodiment, Hesperetin Dihydrochalcone enhances the overall flavor profile of a beverage or food product, particularly in orange CSD and strawberry flavor bottled water.

In another embodiment, Hesperetin Dihydrochalcone enhances the overall mouth-feel of a beverage or food product.

The sweetener provided herein is selected from the group consisting common saccharide sweeteners, e.g., sucrose, fructose (e.g., D-fructose),glucose (e.g., D-glucose); sweetener compositions comprising natural sugars, such as corn syrup (including high fructose corn syrup) or other syrups or sweetener concentrates derived from natural fruit and vegetable sources; semisynthetic "sugar alcohol" sweeteners such as erythritol, isomalt, lactitol, mannitol, sorbitol, xylitol, maltodextrin, glycerol, threitol, arabitol, ribitol, and dulcitol; artificial sweeteners such as miraculin, aspartame, superaspartame, saccharin, saccharin-sodium salt, acesulfame-K, cyclamate, sodium cyclamate, and alitame; other sweeteners such as trehalose, melizitose, melibiose, raffinose, palatinose, lactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose,D-ribose, D-glyceraldehyde, curculin, brazzein, mogroside, Neohesperidin dihydrochalcone (NHDC), neotame and other aspartame derivatives, D-tryptophan, D-leucine, D-threonine, glycine, D-asparagine, D-phenylalanine, L-proline, maltitol, hydrogenated glucose syrup (HGS), magap, sucralose, lugduname, sucrononate, sucrooctate, monatin, phyllodulcin, hydrogenated starch hydrolyzate (HSH), stevioside, rebaudioside A, rebaudioside D, rebaudioside M, and other sweet Stevia based glycosides, lo han guo, thaumatin, monellin, carrelameand amd other guanidine-based sweeteners. Particularly, the sweetener is a high potency sweetener, particularly it is selected from the group consisting of saccharin, aspartame, cyclamate, sucralose, saccharine, stevia, rebauasdioside A, neotame, acesulfame K, sucrose, glucose fructose and sorbitol, more particularly it is selected from the group consisting of fructose and stevia.

In a further embodiment the sweetener is selected from the group consisting of sucrose, fructose, and stevia. In a further embodiment, the sweetener comprises a purified stevia extract having a high purity combination of nine sweet steviol glycosides found within the stevia leaf. The purified stevia extract may be represented by high purity combination of nine sweet steviol glycosides found within the stevia leaf wherein Reb A accounts for over half of the final composition (e.g., SG95 sold by PureCircle).

In one embodiment, Hesperetin Dihydrochalcone significantly increases the sweetness intensity of a strawberry flavored bottled water containing 200 ppm of Steviol Glycosides (SG 95 from PureCircle) without significantly impacting any of the other flavor attributes. Moreover, the addition of 20 ppm Hesperetin Dihydrochalcone can maintain the sweetness intensity of a strawberry flavored beverage having a 20 ppm reduced level of SG95.

In another embodiment, 12 ppm Hesperetin Dihydrochalcone significantly increases the sweetness of 200 ppm Steviol Glycosides (SG95 from PureCircle) for example in a Strawberry flavoured bottled water while also increasing the overall mouth-feel intensity, and lingering sweetness intensity.

In another embodiment, 15ppm Hesperetin Dihydrochalcone significantly increases the sweetness of a 6% sucrose yoghurt drink.

In another embodiment, 15ppm Hesperetin Dihydrochalcone significantly increases the sweetness of a sweetened milk (4.8% sucrose added).

The compositions and methods provided herein have use in beverage or food products. When the beverage or food product is a particulate or powdery food, the dry particles may easily be added thereto by dry-mixing. Typical beverage or food products are selected from the group consisting of an instant soup or sauce, a breakfast cereal, a powdered milk, a baby food, a powdered drink, a powdered chocolate drink, a spread, a powdered cereal drink, a chewing gum, an effervescent tablet, a cereal bar, and a chocolate bar. The powdered foods or drinks may be intended to be consumed after reconstitution of the product with water, milk and/or a juice, or another aqueous liquid.

The beverage or food product may be selected from the group consisting of condiments, baked goods, powdery food, bakery filings and Fluid dairy products.

Condiments include, without limitation, ketchup, mayonnaise, salad dressing, Worcester-shire sauce, fruit-flavored sauce, chocolate sauce, tomato sauce, chili sauce, and mustard.

Bakery fillings include, without limitation, low or neutral pH fillings, high, medium or low solids fillings, fruit or milk based (pudding type or mousse type) fillings, hot or cold make-up fillings and nonfat to full-fat fillings.

Fluid dairy products include, without limitation, non-frozen, partially frozen and frozen fluid dairy products such as, for example, milks, ice creams, sorbets and yogurts.

Beverage products include, without limitation, carbonated soft drinks, including cola, lemon-lime, root beer, heavy citrus ("dew type"), fruit flavored and cream sodas; powdered soft drinks, as well as liquid concentrates such as fountain syrups and cordials; coffee and coffee-based drinks, coffee substitutes and cereal-based beverages; teas,

including dry mix products as well as ready-to-drink teas (herbal and tealeaf based); fruit and vegetable juices and juice flavored beverages as well as juice drinks, nectars, concentrates, punches and "ades"; sweetened and flavored waters, both carbonated and still; sport/energy/health drinks; alcoholic beverages plus alcohol-free and other low-alcohol products including beer and malt beverages, cider, and wines (still, sparkling, fortified wines and wine coolers); other beverages processed with heating (infusions, pasteurization, ultra high temperature, ohmic heating or commercial aseptic sterilization) and hot-filled packaging; and cold-filled products made through filtration or other preservation techniques. SG95 is a natural, high purity combination of nine sweet steviol glycosides found within the stevia leaf. Reb A accounts for over half of the final composition.

The below examples are illustrative only and are not meant to limit the claims or embodiments described herein.

## EXAMPLES

### Example 1

### Sensory tests in model beverages solutions

Twelve model beverage solutions were prepared and tested. The composition and concentrations of the beverages are set forth in Tables 1-3 (grapefruit juice is a market product bought in a Swiss supermarket as well as the coffee).

| Ingredients | g/L | g/L 30% sugar reduction | g/L |
|---|---|---|---|
| Sugar | 70.55 | 49.39 | 0 |
| SG95 | 0 | 0 | 200ppm |
| Citric acid | 1.75 | 1.75 | 1.75 |
| Ascorbic acid | 0.15 | 0.15 | 0.15 |
| Potassium sorbate | 0.15 | 0.15 | 0.15 |
| Tropical compound 050002 JC20181 | 32.00 | 32.00 | 32.00 |
| Water | 928.40 | 949,56 | 998.95 |
| TOTAL | 1032.86 | 1032.86 | 1032.86 |

Table 1: Application formula used to prepare tropical juice with and without sugar

| Ingredients | g/L | g/L 30% red | g/L |
|---|---|---|---|
| Inverted sugar syrup (73°bx) | 98.94 | 69.26 | 0 |
| SG95 | 0 | 0 | 200ppm |
| Citric acid | 1.28 | 1.28 | 1.28 |
| Sodium citrate | 0.10 | 0.10 | 0.10 |
| Potassium sorbate | 0.18 | 0.18 | 0.18 |
| Strawberry 547072 C | 0.77 | 0.77 | 0.77 |
| Volvic water | 922.00 | 951.68 | 1020.74 |
| TOTAL | 1023.27 | 1023,27 | 1023,27 |

Table 2: Application formula used to prepare strawberry flavored water with and without sugar

| Ingredients | g/L | g/L 30% red | g/L |
|---|---|---|---|
| Sugar | 80.00 | 56 | 0 |
| SG95 | 0 | 0 | 200ppm |
| Citric acid | 2.00 | 2.00 | 2.00 |
| Potassium sorbate | 0.15 | 0.15 | 0.15 |
| Orange FJC Brazil 65°bx | 21.31 | 21.31 | 21.31 |
| Orange flavor 050001 3195846 | 0.20 | 0.20 | 0.20 |
| Water | 155.40 | 179.40 | 235.40 |
| Gaz water | 777.00 | 777.00 | 777.00 |
| TOTAL | 1036.06 | 1036.06 | 1036.06 |

Table 3: Application formula used to prepare orange CSD with and without added sugar

The following observations were made:

1. We observed a positive effect of hesperetin DC on perceived sweetness when dosed at 4ppm and 8ppm in a tropical juice.

2. We observed a positive effect of hesperetin DC on perceived sweetness when dosed at 12ppm and 20ppm. An increase in the overall flavor as well as a decrease on sourness is observedd in presence of Hesperetin DC.

3. We observed a positive effect of hesperetin DC on perceived sweetness when dosed at 4ppm and 8ppm in strawberry flavored water.

4. We observed an increased sweetness perception when hesperetin DC is dosed at 12ppm and 20ppm in strawberry flavored water.

5. An increased sweetness perception is observedd when hesperetin DC is dosed at 8ppm in an orange carbonated soft drink. A higher overall flavor is also shown at this dosage.

6. We observed an increased sweetness perception when hesperetin DC is dosed at 12ppm and 20ppm in an orange carbonated soft drink.

7. An increased sweetness perception is showed when hesperetin DC is dosed at 10ppm and 20ppm in a 0% sugar tropical juice (sweetened with stevia SG95). A reduction of sourness is also perceived in presence of Hesperetin DC.

8. An increased sweetness perception is showed when hesperetin DC is dosed at 8ppm and 12ppm as well as an increase in overall flavor in a 0% sugar flavored water (sweetened with stevia SG95).

9. We observed a positive effect of hesperetin DC on perceived sweetness when dosed at 8ppm and 12ppm in a tropical juice.

10. We observed an increased sweetness, a decreased perceived sourness and a diminution of bitterness and astringency when hesperetin DC is dosed at 7ppm and 15ppm in a 100% grapefruit juice (market product).

11. We observed a positive effect of hesperetin DC on perceived sweetness when dosed at 15ppm in an unsweetened coffee.

12. We observed an increased sweetness perception when hesperetin DC is dosed at 15ppm in a sweetened coffee.

The present invention is described by claims 1 to 7.

## Claims

**1.** Use of hesperetin Dihydrochalcone in an amount of 2 to 20 ppm by weight of the total weight of a beverage or food product for enhancing the sweetness of a sweetener in the product and/or the overall flavor profile of the product and/or the overall mouthfeel of the product.

**2.** Use according to claim 1 wherein the amount of hesperetin Dihydrochalcone provided in the product is from about 4 to about 20 ppm by weight of the total weight of the product.

**3.** Use according to claim 2 wherein the amount of hesperetin Dihydrochalcone provided in the product is about 15 ppm by weight of the total weight of the product.

**4.** Use according to claim 1 wherein the sweetener is selected from the group consisting of common saccharide sweeteners, e.g., sucrose, fructose e.g., D-fructose, glucose e.g., D-glucose, and sweetener compositions comprising natural sugars, such as corn syrup including high fructose corn syrup or other syrups or sweetener concentrates derived from natural fruit and vegetable sources, semisynthetic "sugar alcohol" sweeteners such as erythritol, isomalt, lactitol, mannitol, sorbitol, xylitol, maltodextrin, glycerol, threitol, arabitol, ribitol, dulcitol, and the like, and artificial sweeteners such as miraculin, aspartame, superaspartame, saccharin, saccharin-sodium salt, acesulfame-K,cyclamate, sodium cyclamate, and alitame and Sweeteners also include trehalose, melizitose, melibiose, raffinose, palatinose, lactulose, cyclamic acid, mogroside, tagatose e.g., D-tagatose, maltose, galactose e.g., D-galactose, L-rhamnose, D-sorbose, maunose e.g., D-maunose, lactose, L-arabinose,D-ribose, D-glyceraldehyde, curculin, brazzein, mogroside, Neohesperidin dihydrochalcone (NHDC),neotame and other aspartame derivatives, D-tryptophan, D-leucine, D-threonine, glycine, D-asparagine, D-phenylalanine, L-proline, maltitol, hydrogenated glucose syrup (HGS),magap, sucralose, lugduname, sucrononate, sucrooctate, monatin, phyllodulcin, hydrogenated starch hydrolyzate(HSH), stevioside, rebaudioside A and other sweet Stevia based glycosides, lo han guo, thaumatin, monellin, carrelameand other guanidine-based sweeteners.

**5.** A beverage or food product comprising hesperetin Dihydrochalcone in an amount of from 2 to 20 ppm, by weight, of the total weight of the product, and a sweetener, wherein the sweetener is selected from the group consisting of fructose

e.g., D-fructose; and sweetener compositions comprising sweetener concentrates derived from natural fruit and vegetable sources, semisynthetic "sugar alcohol" sweeteners selected form the group consisting of erythritol, isomalt, lactitol, mannitol, sorbitol, xylitol, maltodextrin, glycerol, threitol, arabitol, ribitol, dulcitol; artificial sweeteners such as miraculin, aspartame, superaspartame, saccharin, saccharin-sodium salt, acesulfame-K,cyclamate, sodium cyclamate, and alitame; trehalose, melizitose, melibiose, raffinose, palatinose, lactulose, cyclamic acid, mogroside, tagatose e.g., D-tagatose, maltose, galactose e.g., D-galactose, L-rhamnose, D-sorbose, maunose e.g., D-maunose, lactose, L-arabinose, D-ribose, D-glyceraldehyde, curculin, brazzein, mogroside, Neohesperidin dihydrochalcone (NHDC), neotame and other aspartame derivatives, D-tryptophan, D-leucine, D-threonine, glycine, D-asparagine, D-phenylalanine, L-proline, maltitol, magap, sucralose, lugduname, sucrononate, sucrooctate, monatin, phyllodulcin, hydrogenated starch hydrolyzate(HSH), stevioside, rebaudioside D, rebaudioside M , lo han guo, thaumatin, monellin, carrelameand and guanidine-based sweeteners.

6. The beverage or food product as recited in claim 4 wherein the amount of hesperetin Dihydrochalcone provided in the beverage or food product is from about 4 to about 20ppm by weight of the total weight of the beverage or food product.

7. The beverage or food product as recited in claim 4 wherein the amount of hesperetin Dihydrochalcone provided in the beverage or food product is about 12 ppm by weight of the total weight of the beverage or food product.

## Patentansprüche

1. Verwendung von Hesperetin-Dihydrochalcon in einer Menge von 2 bis 20 Gew.-ppm des Gesamtgewichts eines Getränke- oder Lebensmittelprodukts zur Verbesserung der Süße eines Süßungsmittels im Produkt und/oder des Gesamtgeschmacksprofils des Produkts und/oder des Gesamtmundgefühls des Produkts.

2. Verwendung nach Anspruch 1, wobei die in dem Produkt bereitgestellte Menge an Hesperetin-Dihydrochalcon etwa 4 bis etwa 20 Gew.-ppm des Gesamtgewichts des Produkts beträgt.

3. Verwendung nach Anspruch 2, wobei die in dem Produkt bereitgestellte Menge an Hesperetin-Dihydrochalcon etwa 15 Gew.-ppm des Gesamtgewichts des Produkts beträgt.

4. Verwendung nach Anspruch 1, wobei das Süßungsmittel ausgewählt ist aus der Gruppe bestehend aus üblichen Saccharidsüßungsmitteln, z. B. Saccharose, Fructose, z. B. D-Fructose, Glucose, z. B. D-Glucose, und Süßungsmittelzusammensetzungen, die natürliche Zucker umfassen, wie Maissirup einschließlich Maissirup mit hohem Fructosegehalt oder anderen Sirupen oder Süßungsmittelkonzentraten, die aus natürlichen Frucht- und Gemüsequellen stammen, halbsynthetischen "Zuckeralkohol"-Süßungsmitteln wie Erythrit, Isomalt, Lactit, Mannit, Sorbit, Xylit, Maltodextrin, Glycerin, Threit, Arabit, Ribit, Dulcit und dergleichen und künstlichen Süßungsmitteln wie Miraculin, Aspartam, Superaspartam, Saccharin, Saccharin-Natriumsalz, Acesulfam-K, Cyclamat, Natriumcyclamat und Alitam, und Süßungsmittel auch Trehalose, Melizitose, Melibiose, Raffinose, Palatinose, Lactulose, Cyclaminsäure, Mogrosid, Tagatose, z. B. D-Tagatose, Maltose, Galactose, z. B. D-Galactose, L-Rhamnose, D-Sorbose, Maunose, z. B. D-Maunose, Lactose, L-Arabinose, D-Ribose, D-Glyceraldehyd, Curculin, Brazzein, Mogrosid, Neohesperidin-Dihydrochalcon (NHDC), Neotam und andere Aspartam-Derivate, D-Tryptophan, D-Leucin, D-Threonin, Glycin, D-Asparagin, D-Phenylalanin, L-Prolin, Maltit, hydrierten Glucosesirup (HGS), Magap, Sucralose, Lugdunam, Sucrononat, Sucrooctat, Monatin, Phyllodulcin, hydriertes Stärkehydrolysat (HSH), Steviosid, Rebaudiosid A und andere süße Glykoside auf Stevia-Basis, Luo Han Guo, Thaumatin, Monellin, Carrelam und andere Süßungsmittel auf Guanidinbasis einschließen.

5. Getränke- oder Lebensmittelprodukt, umfassend Hesperetin-Dihydrochalcon in einer Menge von 2 bis 20 Gew.-ppm des Gesamtgewichts des Produkts und ein Süßungsmittel, wobei das Süßungsmittel ausgewählt ist aus der Gruppe bestehend aus Fructose, z. B. D-Fructose; und Süßungsmittelzusammensetzungen, die Süßungsmittelkonzentrate umfassen, die aus natürlichen Frucht- und Gemüsequellen stammen, halbsynthetischen "Zuckeralkohol"-Süßungsmitteln, die aus der Gruppe bestehend aus Erythrit, Isomalt, Lactit, Mannit, Sorbit, Xylit, Maltodextrin, Glycerin, Threit, Arabit, Ribit und Dulcit ausgewählt sind; künstlichen Süßungsmitteln wie Miraculin, Aspartam, Superaspartam, Saccharin, Saccharin-Natriumsalz, Acesulfam-K, Cyclamat, Natriumcyclamat und Alitam; Trehalose, Melizitose, Melibiose, Raffinose, Palatinose, Lactulose, Cyclaminsäure, Mogrosid, Tagatose, z. B. D-Tagatose, Maltose, Galactose, z. B. D-Galactose, L-Rhamnose, D-Sorbose, Maunose, z. B. D-Maunose, Lactose, L-Arabinose, D-Ribose, D-Glyceraldehyd, Curculin, Brazzein, Mogrosid, Neohesperidin-Dihydrochalcon (NHDC), Neotam und anderen Aspartam-Derivaten, D-Tryptophan, D-Leucin, D-Threonin, Glycin, D-Asparagin, D-Phenylalanin, L-Prolin, Maltit,

Magap, Sucralose, Lugdunam, Sukrononat, Sucrooctat, Monatin, Phyllodulcin, hydriertem Stärkehydrolysat (HSH), Steviosid, Rebaudiosid D, Rebaudiosid M, Luo Han Guo, Thaumatin, Monellin, Carrelam and und Süßungsmitteln auf Guanidinbasis.

6. Getränke- oder Lebensmittelprodukt nach Anspruch 4, wobei die in dem Getränke- oder Lebensmittelprodukt bereitgestellte Menge an Hesperetin-Dihydrochalcon etwa 4 bis etwa 20 Gew.-ppm des Gesamtgewichts des Getränke- oder Lebensmittelprodukts beträgt.

7. Getränke- oder Lebensmittelprodukt nach Anspruch 4, wobei die in dem Getränke- oder Lebensmittelprodukt bereitgestellte Menge an Hesperetin-Dihydrochalcon etwa 12 Gew.-ppm des Gesamtgewichts des Getränke- oder Lebensmittelprodukts beträgt.

## Revendications

1. Utilisation d'hespérétine dihydrochalcone en une quantité de 2 à 20 ppm en poids par rapport au poids total d'une boisson ou d'un produit alimentaire pour améliorer la sucrosité d'un édulcorant dans le produit et/ou le profil aromatique global du produit et/ou la sensation en bouche globale du produit.

2. Utilisation selon la revendication 1, la quantité d'hespérétine dihydrochalcone fournie dans le produit étant d'environ 4 à environ 20 ppm en poids par rapport au poids total du produit.

3. Utilisation selon la revendication 2, la quantité d'hespérétine dihydrochalcone fournie dans le produit étant d'environ 15 ppm en poids par rapport au poids total du produit.

4. Utilisation selon la revendication 1, l'édulcorant étant choisi dans le groupe constitué par les édulcorants saccharidiques communs, par exemple le saccharose, le fructose, par exemple le D-fructose, le glucose, par exemple le D-glucose, et les compositions édulcorantes comprenant des sucres naturels, tels que le sirop de maïs, y compris le sirop de maïs à haute teneur en fructose, ou d'autres sirops ou concentrés d'édulcorants dérivés de sources naturelles de fruits et de légumes, des édulcorants semi-synthétiques de type « alcool de sucre » tels que l'érythritol, l'isomalt, le lactitol, le mannitol, le sorbitol, le xylitol, la maltodextrine, le glycérol, le thréitol, l'arabitol, le ribitol, le dulcitol et analogues, et des édulcorants artificiels tels que la miraculine, l'aspartame, le superaspartame, la saccharine, le sel de sodium de la saccharine, l'acésulfame-K, le cyclamate, le cyclamate de sodium et l'alitame. Les édulcorants comprennent également le tréhalose, le mélizitose, le mélibiose, le raffinose, le palatinose, le lactulose, l'acide cyclamique, le mogroside, le tagatose, par exemple le D-tagatose, le maltose, le galactose, par exemple le D-galactose, le L-rhamnose, le D-sorbose, le maunose, par exemple le D-maunose, le lactose, le L-arabinose, le D-ribose, le D-glycéraldéhyde, la curculine, la brazzéine, le mogroside, la néohespéridine dihydrochalcone (NHDC), le néotame et d'autres dérivés de l'aspartame, le D-tryptophane, la D-leucine, la D-thréonine, la glycine, la D-asparagine, la D-phénylalanine, la L-proline, le maltitol, le sirop de glucose hydrogéné (HGS), le magap, le sucralose, le lugduname, le sucrononate, le sucrooctate, la monatine, la phyllodulcine, l'hydrolysat d'amidon hydrogéné (HSH), le stévioside, le rébaudioside A et d'autres glycosides sucrés à base de stévia, le lo han guo, la thaumatine, la monelline, le carrelame et d'autres édulcorants à base de guanidine.

5. Boisson ou produit alimentaire comprenant de l'hespérétine dihydrochalcone en une quantité de 2 à 20 ppm, en poids, par rapport au poids total du produit, et un édulcorant, l'édulcorant étant choisi dans le groupe constitué par le fructose, par exemple le D-fructose ; et les compositions édulcorantes comprenant des concentrés d'édulcorants dérivés de sources naturelles de fruits et de légumes, des édulcorants semi-synthétiques de type « alcool de sucre » choisis dans le groupe constitué par l'érythritol, l'isomalt, le lactitol, le mannitol, le sorbitol, le xylitol, la maltodextrine, le glycérol, le thréitol, l'arabitol, le ribitol, le dulcitol ; des édulcorants artificiels tels que la miraculine, l'aspartame, le superaspartame, la saccharine, le sel de sodium de la saccharine, l'acésulfame-K, le cyclamate, le cyclamate de sodium et l'alitame ; le tréhalose, le mélizitose, le mélibiose, le raffinose, le palatinose, le lactulose, l'acide cyclamique, le mogroside, le tagatose, par exemple le D-tagatose, le maltose, le galactose, par exemple le D-galactose, le L-rhamnose, le D-sorbose, le maunose, par exemple le D-maunose, le lactose, le L-arabinose, le D-ribose, le D-glycéraldéhyde, la curculine, la brazzéine, le mogroside, la néohespéridine dihydrochalcone (NHDC), le néotame et d'autres dérivés de l'aspartame, le D-tryptophane, la D-leucine, la D-thréonine, la glycine, la D-asparagine, la D-phénylalanine, la L-proline, le maltitol, le magap, le sucralose, le lugduname, le sucrononate, le sucrooctate, la monatine, la phyllodulcine, l'hydrolysat d'amidon hydrogéné (HSH), le stévioside, le rébaudioside D, le rébaudioside M, le lo han guo, la thaumatine, la monelline, le carrelame et les édulcorants à base de guanidine.

6. Boisson ou produit alimentaire selon la revendication 4, la quantité d'hespérétine dihydrochalcone fournie dans la boisson ou le produit alimentaire étant d'environ 4 à environ 20 ppm en poids par rapport au poids total de la boisson ou du produit alimentaire.

7. Boisson ou produit alimentaire selon la revendication 4, la quantité d'hespérétine dihydrochalcone fournie dans la boisson ou le produit alimentaire étant d'environ 12 ppm en poids par rapport au poids total de la boisson ou du produit alimentaire.

Hesperetin DHC in tropical JUCO
Overall flavor
Sweetness
Acidity
Bitterness
Astringency
Thickness
Syrupy
Body/Volume
Watery
Off-notes
Long-lasting (sweet)
5
4
3
2
1
0
CONTROL
4ppm
8ppm

Figure 1

Hesperetin DHC in tropical Juice
Overall flavor
Sweetness
Acidity
Bitterness
Astringency
Thickness
Syrupy
Body/Volume
Watery
Off-notes
Long-lasting (sweet)
0
1
2
3
4
5
CONTROL
12ppm
20ppm

Figure 2

Hesperetin DHC in strawberry BWAT
Overall flavor
Sweetness
Acidity
Bitterness
Astringency
Thickness
Syrupy
Body/Volume
Watery
Off-notes
Long-lasting (sweet)
5
4
3
2
1
0
CONTROL
4ppm
8ppm

Figure 3

Hesperetin DHC in strawberry BWAT
Overall flavor
Sweetness
Acidity
Bitterness
Astringency
Thickness
Syrupy
Body/Volume
Watery
Off-notes
Long-lasting (sweet)
5
4
3
2
1
0
CONTROL
12ppm
20ppm

Figure 4

Hesperetin DHC in orange CSD
Overall flavor
Sweetness
Acidity
Bitterness
Astringency
Thickness
Syrupy
Body/Volume
Watery
Off-notes
Long-lasting (sweet)
5
4
3
2
1
0
CONTROL
4ppm
8ppm

Figure 5

Hesperetin DHC in orange CSD
Overall flavor
Sweetness
Acidity
Bitterness
Astringency
Thickness
Syrupy
Body/Volume
Watery
Off-notes
Long-lasting (sweet)
5
4
3
2
1
0
CONTROL
12ppm
20ppm

Figure 6

Hesperetin DHC in tropical JUCO 0%sugar
Overall flavor
Sweetness
Acidity
Bitterness
Astringency
Off-notes
Long-lasting (sweet)
5
4
3
2
1
0
100% Stevia
10ppm
20ppm

Figure 7

Hesperetin DHC in strawberry BWAT 0% sugar
Overall flavor
Sweetness
Acidity
Bitterness
Astringency
Off-notes
Long-lasting (sweet)
0
1
2
3
4
5
100% Stevia
8ppm
12ppm


Figure 8

Hesperetin DHC in orange CSD 0% sugar
Overall flavor
5
4
3
2
1
0
Sweetness
Acidity
Bitterness
Astringency
Off-notes
Long-lasting
(sweet)
100% Stevia
8ppm
12ppm

Figure 9

Hesperetin DC in Grapefruit juice
Overall flavor
Sweetness
Acidity
Bitterness
Astringency
Thickness
Syrupy
Body/Volume
Off-notes
Long-lasting (sweet)
5
4
3
2
1
0
CONTROL
7 ppm
15 ppm

Figure 10

Hesperetin DC in unsweetened coffee
Overall flavor
5
4
3
2
1
0
Sweetness
Acidity
Bitterness
Astringency
Off-notes
Long-lasting (sweet)
COFFEE without sugar - CONTROL
7 ppm
15 ppm

Figure 11

Hesperetin DC in sweetened coffee
Overall flavor
Sweetness
Acidity
Bitterness
Astringency
Off-notes
Long-lasting (sweet)
0
1
2
3
4
5
COFFEE with sugar - CONTROL
7 ppm
15 ppm

Figure 12

Hesperetin DC in yoghurt drink
Sweet
5
4
3
2
1
0
Acidic
Thick
Mouthcoati ng
Fatty
Creamy
Yoghurt
REFERENCE - 8% sucrose
CONTROL - 6% sucrose
10 ppm hesperetin DC
15 ppm Hesperetin DC


Figure 13

Hesperetin DC in sweetened milk
Sweet
5
4
3
2
1
0
Milky
Creamy
Thick
Mouthcoating
Fatty
Long lasting sweet
REFERENCE - 8% sucrose
CONTROL - 4.8% sucrose
7.5 ppm Hesperetin DC
15 ppm Hesperetin DC

Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1909599 A1